# FASCICULE DE BREVET EUROPEEN

(11) **EP 0 368 731 B1**
(45) Date de publication et mention de la délivrance du brevet: **22.03.1995**
(21) Numéro de dépôt: 89403035.2
(22) Date de dépôt: 03.11.1989
(51) Int. Cl.: G06T 1/00

(54) **Procédé et circuit de filtrage de signal de représentation d'image**
Verfahren und Anordnung zur Filterung des Bilddarstellungssignals
Process and circuit for image representation signal filtration

(30) Priorité: 09.11.1988 FR 8814661
(43) Date de publication de la demande: 16.05.1990
(73) Titulaire: FRANCE TELECOM, 75015 Paris (FR)
(72) Inventeur: Jutand, Francis, F-94230 Cachan (FR); Artieri, Alain, F-38240 Meylan (FR)
(74) Mandataire: Fort, Jacques

(56) Documents cités:
- EP-A- 0 189 943
- EP-A- 0 206 892
- EP-A- 0 267 967
- US-A- 4 720 871

## Description

L'invention concerne le filtrage de signal de représentation d'image, le terme "signal d'image" devant être pris dans un sens très général, et comme désignant tout signal représentant des données ayant une répartition bidimensionnelle, qu'on considérera par la suite, pour plus de simplicité, comme désignant une caractéristique (par exemple luminance, contraste ou chrominance) d'un pixel d'image.

L'invention trouve une application importante dans le domaine des installations de traitement d'image en temps réel, qui exigent souvent des opérations de filtrage par convolution.

Il existe déjà de nombreux dispositifs de filtrage d'image, se présentant sous forme de circuits intégrés à grande échelle. L'un des problèmes majeurs auxquels on se heurte pour la réalisation de ces dispositifs est le nombre élevé de broches nécessaires pour amener les coefficients de filtrage au circuit, dès que la taille du noyau de convolution est élevée. En effet, les dispositifs habituels effectuent en parallèle, sur chaque pixel à son tour, tous les produits partiels requis pour la multiplication matricielle par ligne et/ou colonne de la matrice du noyau de convolution.

EP-A-0 189 943 concerne un système multiprocesseur de convolution. Il décrit la mise en oeuvre d'une matrice de processeurs correspondant à la dimension du noyau de convolution, réalisée en LSI, et en combinaison avec un balayage de lignes.

US-A-4 720 871 concerne un système monoprocesseur de convolution fonctionnant de manière "off-line". L'image à convoluer se trouve dans une mémoire type RAM. La convolution prend place de manière consécutive. Ce document décrit l'idée de créer les produits partiels intervenants dans un calcul de convolution en multipliant un coefficient du noyau de convolution par tous les pixels concernés dans une image, au lieu de multiplier un pixel d'image par tous les coefficients dans un noyau de convolution.

L'invention vise à fournir un procédé et un dispositif répondant mieux que ceux antérieurement connus aux exigences de la pratique, notamment en ce qu'elle permet d'arriver à une complexité moindre pour un calcul en temps réel et à un circuit ayant un nombre moindre de broches.

Dans ce but, l'invention propose un procédé de filtrage de signal d'image bidimensionnelle suivant la revendication 1.

Les pixels nécessaires et suffisants pour déterminer les transformés de tous les pixels du bloc sont contenus dans une fenêtre de 2*N-1 colonnes de 2*M-1 pixels englobant le bloc.

L'invention propose également un circuit de filtrage permettant de mettre en oeuvre le procédé ci-dessus défini, conforme à la revendication 3. Les revendications 4 à 8 décrivent des réalisations particulières. Les coefficients de filtrage appliqués aux différents pixels sont distribués chacun à leur tour, mais chaque fois à toutes les voies de calcul. Au contraire, les pixels de la fenêtre de l'image contenant tous les pixels nécessaires au calcul des transformés des pixels du bloc traité circulent entre les voies et les sommes des produits partiels de convolution pour un même pixel du noyau de convolution sont fixes en position dans les voies.

L'invention sera mieux comprise à la lecture de la description qui suit d'un mode particulier de réalisation, donné à titre d'exemple non limitatif. La description se réfère aux dessins qui l'accompagnent, dans lesquels :
- la Figure 1 est un schéma destiné à montrer la relation entre un bloc de coefficients constituant le noyau de convolution, et une fraction de l'image à filtrer dans le cas où M et N sont impairs ;
- la Figure 2 est un schéma montrant quatre coefficients constituant un noyau de convolution et la fraction d'image (qui sera dénommée plus loin "imagette") sur laquelle s'effectue le filtrage en une seule séquence et dont la taille correspond à celle du bloc, et l'ensemble des pixels intervenant dans la séquence ;
- la Figure 3 est un schéma de balayage bloc "par colonne" utilisable pour la mise en oeuvre de l'invention,
- la Figure 4, similaire à la Figure 3, montre un mode de balayage bloc "par colonne" constituant une variante de celui de la Figure 1 et particulièrement bien adapté à la mise en oeuvre de l'invention,
- les Figures 5A, 5B, 5C et 5D sont des schémas montrant les cycles successifs d'une séquence de filtrage ;
- la Figure 6 est un schéma montrant un mode d'utilisation de lignes à retard pour appliquer les signaux nécessaires à un circuit de filtrage ;
- la Figure 7 montre un mode de balayage possible d'image, dans le cas où H=3M ;
- la Figure 8 est un synoptique de processeurs de base, permettant de constituer une matrice de calcul;
- la Figure 9 montre la constitution générale d'un dispositif suivant l'invention ;
- la Figure 10 montre une variante possible de réalisation ;
- la Figure 11 est un chronogramme des signaux primaires de séquencement du dispositif.

Avant de décrire un mode particulier de réalisation de l'invention, il peut être utile de rappeler le principe du filtrage par convolution.

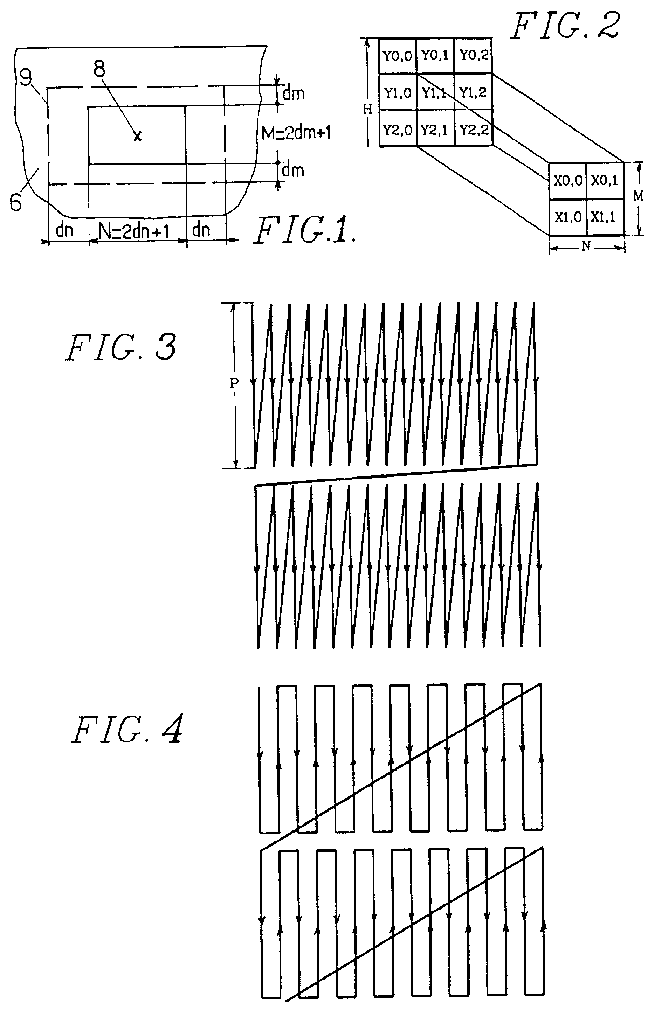

Le filtrage par convolution s'effectue en effectuant, pour chaque pixel de l'image à filtrer, la somme des produits partiels obtenus chacun par multiplication d'une caractéristique d'un pixel de l'image, dans une zone contenant le pixel dont le transformé est calculé, par un coefficient appartenant à un noyau de convolution. Comme le montre la Figure 1, on peut considérer que, pour un pixel déterminé 8 d'une image 6, l'obtention du transformé fait intervenir N colonnes de chacune M pixels dans une "imagette" centrée sur le pixel 8, lorsque le noyau de convolution est à MxN coefficients.

Suivant l'invention, le transformé d'un pixel n'est pas calculé en formant simultanément tous les produits partiels de convolution correspondant à ce pixel, donc en un cycle de calcul ; au contraire on calcule au cours d'un cycle, pour tous les pixels de l'imagette, la contribution d'un des coefficients à la somme des produits de convolution. En d'autres termes, on calculera simultanément, au cours d'un même cycle, tous les produits partiels dans lesquels intervient un même coefficient de convolution x. Avec M = 2dm+1 et N = 2dn+1 (dm et dn étant des nombres entiers), on peut considérer, de façon arbitraire, qu'interviennent dans le calcul des transformés de l'imagette montrée en traits pleins sur la Figure 1, l'ensemble des pixels dans une fenêtre 9 constituant, autour de l'imagette, un halo de largeur dn et de hauteur dm, et seulement ceux-ci.

On est donc conduit à découper l'image 6 en imagettes adjacentes, qui seront successivement traitées. Au bord de l'image, une fraction de la fenêtre 9 ne sera pas disponible et les pixels absents seront remplacés par des valeurs fixes prédéterminées pour calculer les transformés.

On supposera dans ce qui suit, pour simplifier, que chaque terme du produit de convolution est constitué par la multiplication simple du coefficient de pondération du noyau par la valeur du pixel auquel est appliqué le coefficient.

Sur la Figure 2, on a représenté, pour simplifier, M = N = 2. Dans le cas H = 2M-1 et L = 2N-1 illustré, où M = N = 2, chaque imagette comporte quatre pixels et le noyau de convolution est à quatre coefficients x0,0 ; ... ; x1,1. H = L = 3, c'est-à-dire que chaque fenêtre comporte 9 pixels y0,0, ..., y2,2. Dans ce cas, on doit calculer M*N = 4 produits partiels. Le calcul de chaque transformé implique N*M multiplications et N*M accumulations, ce qui correspond à 2(NM)² opérations par imagette. Comme, en temps réel, les coefficients du noyau sont transmis un à un en N*M cycles, il faut disposer d'un circuit de calcul permettant de réaliser 2N*M opérations par cycle, c'est-à-dire d'une puissance de calcul proportionnelle à la taille M*N du bloc.

Conformément à l'invention, les calculs correspondant à tous les emplacements possibles du noyau M*N dans la fenêtre sont effectués en parallèle pour un même coefficient x, le nombre de cycles de calcul, et lui seul, dépendant de la taille du bloc, c'est-à-dire du noyau de convolution.

On sait qu'on utilise habituellement le balayage dit "vidéo" pour la transmission des images de télévision et plus généralement des images analysées point par point : chaque ligne complète est balayée à son tour, un intervalle de suppression ligne étant prévu entre deux lignes successives. Le procédé suivant l'invention utilise un mode différent de balayage, qu'on peut appeler "balayage bloc par colonne", qui permet de simplifier notablement l'architecture des circuits de calcul.

La Figure 3 montre un premier exemple d'un tel type de balayage qui a l'avantage de ne fixer que la taille M de bloc. L'image est balayée par bandes successives dont la hauteur est une fraction entière de la hauteur de l'image et est égale à la hauteur d'un bloc.

La Figure 4 montre une variante du balayage bloc par colonne qui est encore plus avantageuse que la précédente. Mais la transformation d'un mode de balayage en un autre peut s'effectuer de façon très simple, à l'aide d'un registre de capacité suffisante pour contenir une colonne du bloc. Si la transmission par lignes de l'image s'effectue par balayage classique de type vidéo, une conversion d'entrée, avant traitement d'image proprement dit, peut être effectuée en utilisant une mémoire de capacité égale à P lignes de l'image, P étant la hauteur de bande du balayage de bloc.

Pour plus de clarté, la mise en oeuvre du procédé suivant l'invention sera tout d'abord décrite en se limitant au cas de blocs (c'est-à-dire de noyaux) et de fenêtres du genre montré en Figure 2. La généralisation du procédé est immédiate, le nombre de voies de calcul étant dans tous les cas égal au nombre de déplacements possibles tandis que le nombre de cycles de la séquence élémentaire du procédé, pour chaque bloc, est dans tous les cas égal à 2M, quelle que soit la valeur de N, la séquence élémentaire étant répétée autant de fois que nécessaire jusqu'au déroulement de M*N cycles.

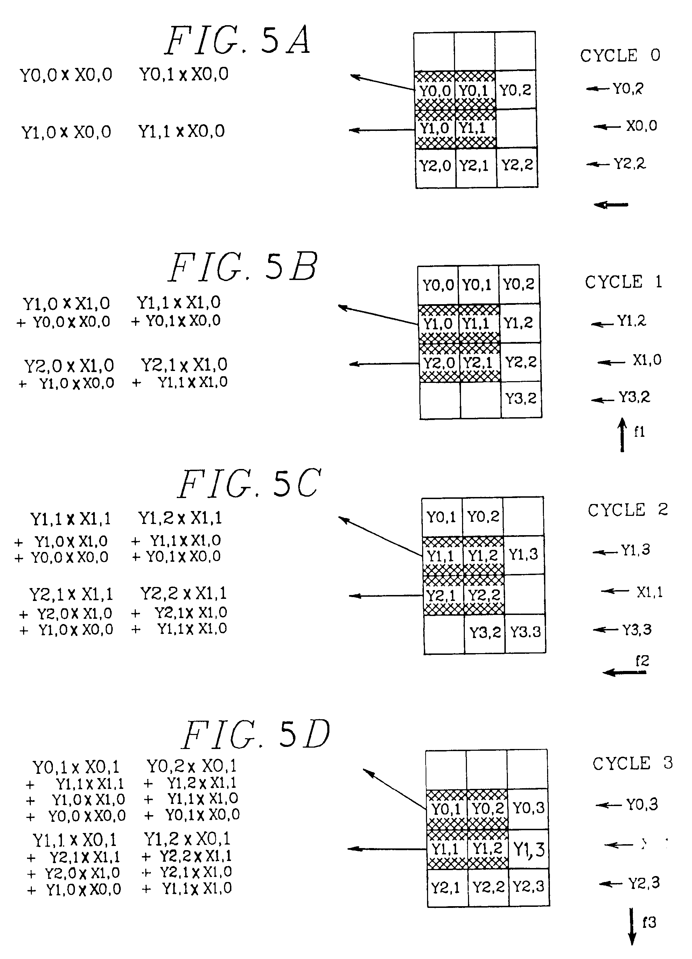

Les Figures 5A à 5D illustrent respectivement les cycles 0, 1, 2 et 3 de calcul. Au cours de chaque cycle, 4 calculs sont effectués en parallèle, pour déterminer le produit partiel pour toutes les correspondances possibles, mais sur un seul à la fois des coefficients x0,0 ; x0,1 ; x1,0 ; x1,1 et tous les pixels appropriés de la fenêtre (Figure 2). A chaque cycle, toutes les voies reçoivent le coefficient x_{m,n} (avec m ε (0,1) et n ε (0,1) et toutes les voies travaillent en parallèle pour calculer chacune un produit partiel (x_{m,n}*,y_{m+i,n+j}), produit correspondant à un coefficient du noyau.

Les seules opérations nécessaires sur les points de la fenêtre sont alors des décalages (d'une position vers le haut, d'une position vers le bas et d'une position vers la gauche). Les opérations arithmétiques se limitent à des multiplications et des accumulations ; et on verra que l'amenée des données définissant les pixels de la fenêtre n'implique aucune complication des entrées.

Dans l'exemple montré sur les Figures 5A à 5D, les opérations effectuées au cours des quatres cycles sont les suivantes.

### Cycle 0 (Figure 5A)

Le coefficient x0,0 est distribué à toutes les voies de calcul en parallèle, qui seront matérialisées chacune par un processeur. Chacune des voies calcule et mémorise le produit (x_{0,0},y_{i,j}) relatif à la position (i,j) qui est associée à la voie de calcul (où 0≦i≦2 et 0≦j≦2).

La partie gauche de la Figure 5A montre les quatre résultats qui apparaissent simultanément et correspondent aux termes pour les coefficients y0,0 ; ... ; y1,1 et le coefficient x0,0.

### Cycle 1 (Figure 5B)

Au cours du cycle 1 on effectue en parallèle le calcul des neuf produits (x_{1,0},y_{1+i,j}). Pour cela chacune des voies de calcul doit recevoir le point de la fenêtre situé immédiatement au-dessous de celui qui a été utilisé au cours du cycle 0. En d'autres termes, il faut effectuer un décalage de tous les points de la fenêtre d'une position vers le haut, comme indiqué par la flèche f1, avant de calculer les termes correspondant aux quatre possibilités.

Au cours du même cycle 1, d'une part, on calcule le produit partiel correspondant au déplacement et, d'autre part, on l'ajoute à celui du cycle 0 par accumulation, comme cela est montré à la partie gauche de la Figure 5B.

### Cycle 2 (Figure 5C)

Le cycle 2 correspond au calcul de tous les produits partiels pour le coefficient x1,1 : chaque processeur calcule donc un des produits (x_{1,1},y_{1+i,1+j}). On effectue donc un décalage de tous les points de la fenêtre d'une position vers la gauche (flèche f2) avant de calculer les produits partiels qu'on accumule avec les produits précédents (partie gauche de la Figure 5C).

### Cycle 3 (Figure 5D)

Au cours du cycle 3, on effectue le même calcul qu'au cours du cycle 2 mais sur x0,1, ce qui conduit à décaler tous les points de la fenêtre d'une position vers le bas (flèche f3). Chaque produit partiel calculé est ajouté au résultat partiel correspondant pour chacun des transformés possibles ; on obtient en conséquence la somme des produits partiels pour l'ensemble du noyau de convolution correspondant à chacun des quatre transformés possibles.

Les opérations montrées sur les Figures 5A à 5D sont avantageusement effectuées à l'aide d'un circuit comprenant une matrice de 2*2 processeurs constituant chacun une voie et chacun capable de stocker la donnée représentative d'un point de la fenêtre et le résultat du calcul correspondant à un déplacement et des registres supplémentaires pour stocker des points de la fenêtre amenés au cours de chaque cycle, utilisés dans le calcul non pas au cours de ce cycle, mais lors du cycle de calcul suivant.

Si on considère les parties en grisé sur les Figures 5A à 5D comme représentant les processeurs requis, on voit que les transferts de données en dehors des périodes d'initialisation sont les suivants :
- Au début du cycle 0, les données y0,0 à y1,1 sont déjà disponibles dans les processeurs du fait de la séquence de cycles précédente ; x0,0 est distribué à tous les processeurs ; y0,2 et y2,2 sont appliqués sur les entrées de la matrice et mémorisés dans des registres d'entrée.
- Au début du cycle 1 la donnée x1,0 est distribuée à tous les processeurs ; les données y1,2 et y3,2 sont introduites dans les registres d'entrée : ces registres d'entrée contiennent alors la totalité de la colonne suivante de la fenêtre. Le contenu y des processeurs est décalé d'une position vers le haut (flèche f1).
- Au cours du cycle 2 la donnée x1,1 est distribuée à tous les processeurs et les points de la fenêtre sont décalés d'une position vers la gauche (flèche f2). En même temps les données y1,3 et y3,3 sont introduites dans les registres d'entrée correspondant.
- Enfin, au cours du cycle 3 où la donnée x0,1 est distribuée et la fenêtre est décalée vers le bas (flèche f3), les données y0,3 et y2,3 sont introduites : on dispose donc des données y requises pour amorcer la séquence de cycles correspondant au bloc suivant de l'image.

On décrira maintenant un circuit constituant un mode de mise en oeuvre possible du procédé qui vient d'être décrit, en supposant que le mode de balayage adopté est le balayage par colonne modifié schématisé en Figure 4. On supposera encore que les blocs ont une dimension M*N, et que la fenêtre contenant l'ensemble des pixels nécessaire aux calculs des M*N transformés a une taille H*L telle que H = 2M-1 et L = 2N-1.

Il faut deux entrées pour amener les points de la fenêtre.

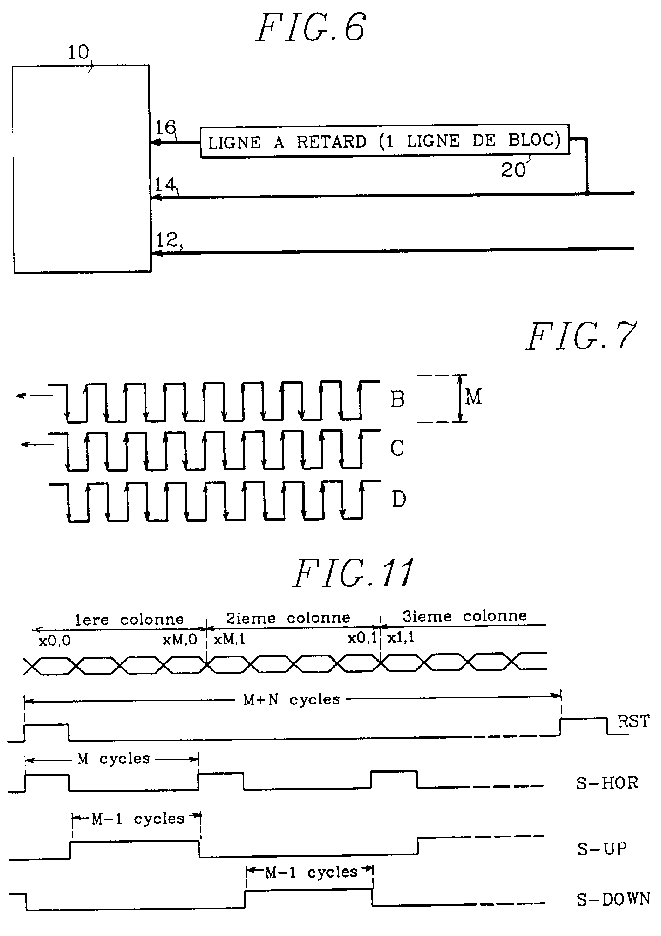

Le module de filtrage 10 reçoit alors sur une entrée 12 les valeurs X des coefficients du noyau. Pour traiter les blocs définis par les bandes B et C de l'image (Figure 7), le module de filtrage 10 doit disposer des pixels des bandes B et C de l'image. Pour cela, les deux entrées 14 et 16 du module de filtrage 10 reçoivent respectivement les signaux d'image de la bande de blocs C immédiatement au-dessous de la bande de blocs B et les signaux d'image de la bande de blocs B obtenue par l'intermédiaire d'une ligne à retard 20 d'une capacité égale à une bande de blocs. En résumé, les entrées 14 et 16 correspondent aux mêmes pixels avec un décalage d'une bande de blocs dans le temps.

Une fois le traitement des blocs définis par les bandes B et C terminé, le traitement des blocs définis par les bandes C et D de l'image peut commencer : on fournit alors au module 10 les pixels des bandes de blocs C et D de l'image (Figure 7).

Le coeur du module de filtrage 10 est constitué par une matrice de M lignes ayant chacune N processeurs, destinés chacun à calculer un transformé par filtrage. La position qu'occupe le processeur dans la matrice correspond à l'emplacement du transformé dans l'imagette filtrée donc du bloc mis en jeu, dans la fenêtre.

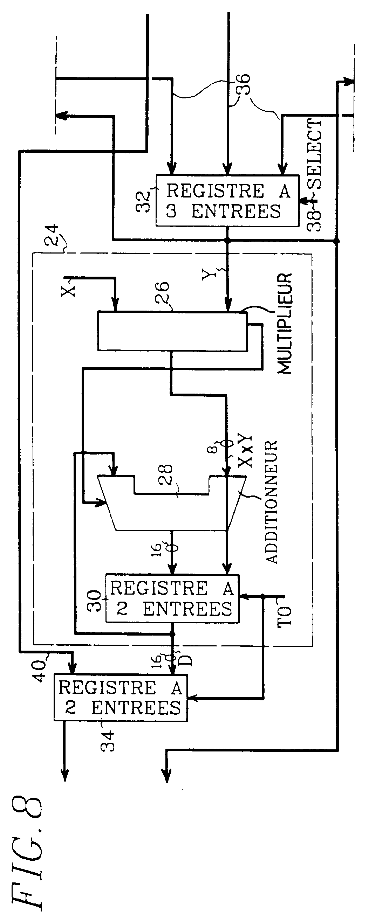

Chacun des processeurs du module 10 peut avoir la constitution montrée schématiquement en Figure 8 dans le cas où chaque produit partiel est de la forme X*Y. X est un coefficient commun à tous les processeurs, amené par une entrée commune, et Y est une donnée locale spécifique à chaque processeur. Le processeur peut être regardé comme comprenant un circuit de calcul de produit 24, un registre d'entrée 32 et un registre de sortie 34.

Le circuit de calcul 24 comprend un multiplieur 26 qui reçoit le coefficient commun X et la donnée locale Y et fournit X*Y à l'une des entrées d'un accumulateur constitué d'un additionneur 28 et d'un registre 30. La seconde entrée de l'additionneur reçoit une donnée rebouclée de la sortie du registre 30. La sortie de l'additionneur et X*Y sont appliquées sur les deux entrées du registre 30 qui accumule les produits partiels de convolution. La sortie du registre étant réappliquée à l'entrée de l'additionneur 28, la somme des produits apparaît à la sortie du registre 30 à l'issue de tous les cycles de calcul. Une entrée d'initialisation T0 permet de remettre l'accumulateur à zéro à l'issue de chaque opération de traitement d'un bloc.

Le registre d'entrée 32 permet de récupérer une nouvelle donnée Y provenant soit du processeur placé au-dessus dans la matrice, soit du processeur placé au-dessous, soit du processeur placé à droite. Il comporte pour cela trois entrées 36 et une entrée de sélection 38.

Le registre de sortie 34 mémorise soit la somme des produits contenue dans l'accumulateur constitué de l'additionneur 28 et du registre 30 du circuit de calcul 24 (ce transfert se faisant pendant le cycle d'initialisation de l'accumulateur lors du signal T0), soit le contenu du registre de sortie du processeur 24 situé à droite du processeur considéré. Pour cela, le registre 34 comporte une entrée recevant la somme des produits (c'est-à-dire le transformé), une entrée 40 recevant le contenu du registre du processeur situé à droite et une entrée de commande recevant la synchronisation To.

On peut notamment utiliser des données codées sur 8 bits, les composants de l'accumulateur étant alors prévus pour traiter des mots de 16 bits.

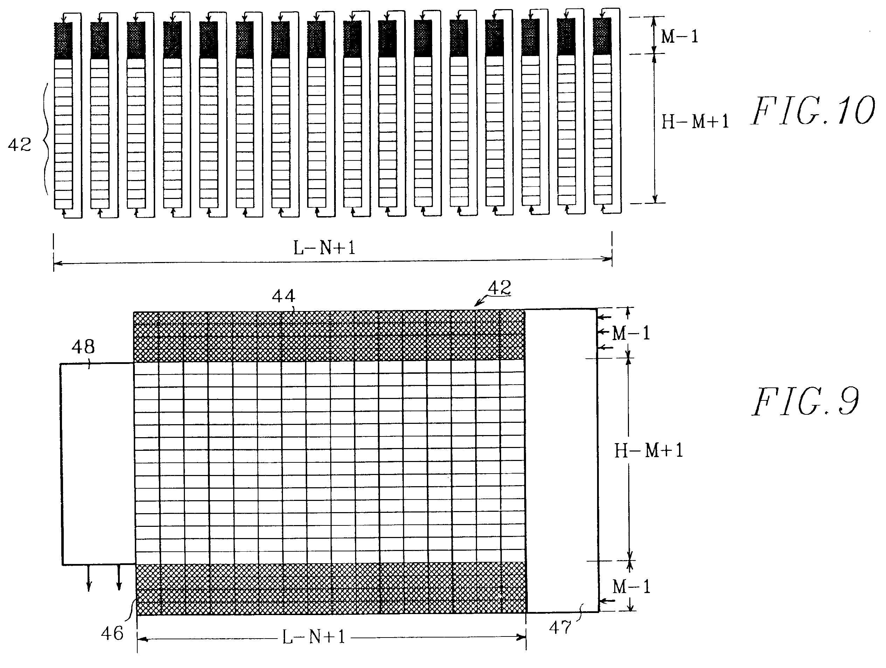

Le module de filtrage 10 montré en Figure 9 comprend, en plus de la matrice de M*N processeurs, deux groupes 44 et 46 de registres supplémentaires. Ces registres supplémentaires sont destinés à recevoir les points de la fenêtre qui sortent de la matrice de processeurs lorsqu'on effectue un décalage vertical : il est alors nécessaire de disposer de (H-M) = M-1 lignes de chacune N registres à trois entrées, organisés de la même façon que les registres d'entrée 32 de la matrice de processeurs.

Sur la Figure 9, les registres supplémentaires sont regroupés en M-1 lignes de registres au-dessus des processeurs et M-1 lignes de registres au-dessous des processeurs. Une autre solution, plus favorable du point de vue du nombre de registres supplémentaires requis, est montrée en Figure 10. Elle consiste à utiliser uniquement la quantité strictement nécessaire de registres supplémentaires (indiqués en grisé) avec un rebouclage à travers la matrice de processeurs 42. Mais cette solution nécessite une plus grande transparence de la matrice de processeurs.

Enfin, le module comporte un registre d'entrée général 47 à droite de la matrice de processeurs et un registre à décalage de mémorisation 48, à gauche de la matrice, dans le cas des décalages envisagés plus haut. Le registre 48 a une structure telle qu'il puisse stocker, en un seul cycle, M données fournies en parallèle et se vider en M cycles.

Le registre général d'entrée fonctionne comme les registres 32.

Le séquencement des différents composants du circuit de traitement décrit ci-dessus est très simple, puisqu'il suffit de quatre signaux de synchronisation, utilisés directement ou combinés avec le signal général d'horloge du circuit, fourni par une horloge locale, non représentée.

La Figure 11 montre la répartition dans le temps de ces quatre signaux par rapport au signal d'horloge, représentée à la ligne supérieure.

Le signal de remise à zéro RST indique le début d'un calcul : il commande le transfert des résultats du calcul déjà effectué pour le bloc précédent. Il est donc équivalent au signal T₀ montré en Figure 8.

Le signal de décalage horizontal vers la gauche S-HOR provoque le décalage horizontal vers la gauche des points de la fenêtre et provoque les déplacements au cours des cycles 0 et 2 de l'exemple. Ce signal indique donc le départ du traitement d'une nouvelle colonne et est en phase avec le traitement du premier pixel d'une colonne.

Le signal de décalage vertical vers le haut S-UP provoque les décalages nécessaires pendant M-1 cycles pour effectuer les calculs correspondant aux M-1 pixels restant dans une colonne parcourue du haut vers le bas.

Le signal de décalage vertical vers le bas S-DOWN joue un rôle identique pour une colonne parcourue du bas vers le haut.

Les signaux de décalage vertical vers le haut S-UP et vers le bas S-DOWN des points de la fenêtre interviennent alternativement, et chacun avec une durée de M-1 cycles.

La séquence élémentaire de 2M cycles est donc constituée dans l'ordre de un cycle de décalage horizontal activé par S-HOR suivi de M-1 cycles de décalages vers le haut activés par S-UP suivis de un cycle de décalage horizontal activé par S-HOR suivi de M-1 cycles de décalages vers le bas activés par S-DOWN.

## Revendications

1. Procédé de filtrage de signal d'image bidimensionnelle, suivant lequel on détermine le transformé de chaque pixel d'image en effectuant un produit de convolution à MxN coefficients sur les pixels d'une zone d'image à N colonnes de chacune M pixels, ladite zone d'image contenant le pixel dont le transformé est à déterminer,
**caractérisé en ce que**,
l'image étant représentée par des pixels obtenus par balayage colonne par colonne de bandes ayant chacune une hauteur égale à une fraction entière de l'image,
- on découpe ladite image en blocs adjacents représentant chacun N colonnes de M pixels, et
- on détermine simultanément les transformés de tous les pixels d'un même bloc en MxN cycles par : calcul en parallèle par MxN processeurs, au cours d'un même cycle, de tous les produits partiels de convolution d'un seul des coefficients de filtrage et de tous les pixels susceptibles de donner naissance à un produit partiel intervenant dans le calcul des transformés de tous les pixels du bloc, dans une fenêtre de l'image contenant le bloc et accumulation des produits partiels obtenus, avec les produits partiels appropriées et accumulés aux cycles précédents pour chaque pixel, le cycle étant répété pour chaque coefficient à son tour ;
ladite détermination étant répétée pour chacun des blocs.

2. Procédé selon la revendication 1, caractérisé en ce que les bandes ont une hauteur égale à M.

3. Circuit de filtrage de signal d'image bidimensionelle, caractérisé en ce qu'il comprend :
- une matrice (10) de M lignes de chacune N processeurs (24, 32, 34),
- des premiers moyens pour distribuer à tous les processeurs un coefficient de convolution (x) appartenant à un noyau de convolution de dimension MxN, pendant un même cycle et pour remplacer le coefficient par un autre lors du passage d'un cycle au suivant, jusqu'à exécution de MxN cycles,
- des seconds moyens (32) pour appliquer à chaque processeur, au cours des cycles successifs, des données (y) représentatives de pixels de la fenêtre dont le décalage par rapport à la position du coefficient distribué au cours du cycle reste inchangé, les processeurs (24, 32, 34) étant prévu pour calculer MxN produits de convolution partiels pour un coefficient au cours d'un cycle et chaque processeur étant prévu pour totaliser, au fur et à mesure des cycles, les produits de convolution partiels pour tous les coefficients du bloc et pour mémoriser la valeur cumulée.

4. Circuit selon la revendication 3, caractérisé en ce que les seconds moyens (47) sont prévus pour faire progresser simultanément tous les pixels de l'image dans les processeurs, qui ont une disposition matricielle, suivant un trajet tel qu'à l'issue de MxN cycles, chaque processeur ait cumulé la totalité des produits partiels pour un transformé déterminé.

5. Circuit selon la revendication 3 ou 4, caractérisé en ce que chaque processeur comporte un circuit de calcul du transformé d'un pixel (24), un registre d'entrée (32) et un registre de sortie (34).

6. Circuit selon la revendication 5, caractérisé en ce que le circuit de calcul comporte un organe de calcul de produit partiel et un additionneur-accumulateur (28, 30).

7. Circuit selon la revendication 6, caractérisé en ce que les seconds moyens comprennent un registre général (47) d'entrée dans la matrice de processeurs, comportant deux entrées, l'une des entrées recevant directement les pixels correspondant au bloc à traiter, tandis que l'autre entrée reçoit les pixels par l'intermédiaire d'une ligne à retard, fournissant un retard correspondant à une ligne de blocs.

## Patentansprüche

1. Verfahren zur Filterung eines zweidimensionalen Bildsignals, bei welchem die Transformierte jedes Bildpixels durch Bilden eines Faltungsproduktes von MxN Koeffizienten mit den Pixeln eines Bildbereichs von N Spalten mit jeweils M Pixeln bestimmt wird, wobei der Bildbereich das Pixel enthält, dessen Transformierte bestimmt werden soll,
dadurch gekennzeichnet, daß bei Darstellung des Bildes durch Pixel, welche durch spaltenweise Abtastung von Streifen erhalten werden, welche jeweils eine Höhe aufweisen, die gleich einem ganzahligen Bruchteil des Bildes ist,
- das Bild in aneinandergrenzende Blöcke zerlegt wird, welche jeweils N Spalten mit M Pixeln darstellen, und
- in MxN Zyklen gleichzeitig die Transformierten aller Pixel ein und desselben Blocks bestimmt werden: indem in einem den Block enthaltenden Fenster des Bildes im Verlaufe ein und desselben Zyklus mittels MxN Prozessoren alle Faltungsteilprodukte eines einzigen der Filterkoeffizienten mit all den Pixeln parallel berechnet werden, die zu einem Teilprodukt führen können, welches in die Berechnung der Transformierten aller Pixel des Blocks eingeht, und indem die erhaltenen Teilprodukte zu den geeigneten und in den vorhergehenden Zyklen akkumulierten Teilprodukten akkumuliert werden, wobei der Zyklus für jeden Koeffizienten gesondert wiederholt wird,
wobei diese Bestimmung für jeden der Blöcke wiederholt wird.

2. Verfahren nach Anspruch 1, dadurch gekennzeichnet, daß die Höhe der Streifen M beträgt.

3. Schaltung zur Filterung eines zweidimensionalen Bildsignals, dadurch gekennzeichnet, daß sie aufweist:
- eine Matrix (10) von M Zeilen mit jeweils N Prozessoren (24, 32, 34),
- erste Mittel, um einen einem Faltungskern der Dimension MxN zugehörigen Faltungskoeffizienten (x) während ein und desselben Zyklus an alle Prozessoren zu verteilen und um den Koeffizienten beim Übergang von einem Zyklus zum nächstfolgenden durch einen anderen zu ersetzen, bis MxN Zyklen ausgeführt sind,
- zweite Mittel (32), um im Verlaufe der aufeinanderfolgenden Zyklen an jeden Prozessor Daten (y) anzulegen, welche die Pixel des Fensters repräsentieren, dessen Verschiebung relativ zu der Position des im Verlaufe des Zyklus verteilten Koeffizienten unverändert bleibt, wobei die Prozessoren (24, 32, 34) dazu vorgesehen sind, um für einen Koeffizienten im Verlaufe eines Zyklus MxN Faltungsteilprodukte zu berechnen, und wobei jeder Prozessor dazu vorgesehen ist, um die Faltungsteilprodukte für alle Koeffizienten des Blocks entsprechend der Zyklen zusammenzustellen und den kumulierten Wert zu speichern.

4. Schaltung nach Anspruch 3, dadurch gekennzeichnet, daß die zweiten Mittel (47) dazu vorgesehen sind, alle Pixel des Bildes in den Prozessoren, welche eine Matrixanordnung aufweisen, gemäß einem derartigen Verlaufe gleichzeitig fortschreiten zu lassen, daß am Ende von MxN Zyklen jeder Prozessor die Gesamtheit der Teilprodukte für eine bestimmte Transformierte kumuliert hat.

5. Schaltung nach einem der Ansprüche 3 oder 4, dadurch gekennzeichnet, daß jeder Prozessor eine Rechenschaltung zur Berechnung der Transformierten eines Pixels (24), ein Eingangsregister (32) und ein Ausgangsregister (34) aufweist.

6. Schaltung nach Anspruch 5, dadurch gekennzeichnet, daß die Rechenschaltung ein Element zur Berechnung von Teilprodukten und einen Addierer-Akkumulator (28, 30) umfaßt.

7. Schaltung nach Anspruch 6, dadurch gekennzeichnet, daß die zweiten Mittel in der Prozessorenmatrix ein Haupt-Eingangsregister (47) umfassen, welches zwei Eingänge aufweist, wobei der eine der Eingänge die dem zu bearbeitenden Block entsprechenden Pixel direkt empfängt, während der andere Eingang die Pixel über eine Verzögerungsleitung empfängt, welche für eine einer Zeile von Blöcken entsprechende Verzögerung sorgt.

## Claims

1. A two-dimensional picture signal filtering method comprising determining the transform of each picture pixel by carrying out an MxN coefficients convolution product on the pixels of a picture zone having N columns with M pixels each, said picture zone containing the pixel whose transform is to be determined,
characterized in that,
the picture being represented by pixels obtained by scanning successive columns of bands each having a height equal to an entire fraction of the picture,
- said picture is split into adjacent blocks each representing N columns of M pixels, and
- the transforms of all pixels of a same block are determined simultaneously in MxN cycles by: parallel computation, by MxN processors, during a same cycle, of all the partial convolution products of a single one of the filtering coefficients and of all pixels providing a partial product intervening in the computation of the transforms of all pixels of the block, in a window of the picture containing the block, and summation of the partial products obtained with the appropriate partial products accumulated during the preceding cycles, the cycle being repeated for each coefficient in turn;
said determination being repeated on each of the blocks.

2. Method according to claim 1, characterized in that the bands have a height equal to M.

3. A filtering circuit for filtering a bi-dimensional picture signal, characterized in that it comprises:
- a matrix array (10) of M lines each with N processors (24,32,34),
- first means for distributing a convolution coefficient (x) belonging to a convolution kernel of size MxN to all the processors during a same cycle and for replacing the coefficient by another coefficient when passing from one cycle to the next, until MxN cycles have been carried out,
- second means (32) for applying to each processor, during successive cycles, data (y) representative of pixels of the window whose shift with respect to the position of the coefficient distributed during the cycle remains unchanged, the processors (24,32,34) being arranged for calculating MxN partial convolution products per coefficient during a cycle, and each processor being arranged for summing, progressively during the successive cycles, the partial convolution products for all the coefficients of the block and for storing the value resulting from the summation.

4. Circuit according to claim 3, characterized in that the second means (47) are arranged for simultaneously shifting all pixels of the picture in the processors, which have a matricial arrangement, along a path such that, after MxN cycles, each processor has summed all partial products for a predetermined transform.

5. Circuit according to claim 3 or 4, characterized in that each processor comprises a circuit for computing the transform of a pixel (24), an input register (32) and an output register (34).

6. Circuit according to claim 5, characterized in that the computing circuit comprises a unit for computing a partial product and an adding-storing unit (28,30).

7. Circuit according to claim 6, characterized in that the second means comprise a general register (47), constituting an input of the matrix of processors, having two inputs, one of the inputs directly receiving the pixels corresponding to the block to be processed while the other input receives the pixels via a delay line which provides a delay corresponding to one line of blocks.
